# EUROPÄISCHE PATENTANMELDUNG

(11) **EP 0 844 021 A2**
(43) Veröffentlichungstag der Anmeldung: **27.05.1998**
(21) Anmeldenummer: 97890222.9
(22) Anmeldetag: 10.11.1997
(51) Int. Cl.: B01J 8/18, B01J 8/38, C10G 11/18

(54) **Vorrichtung zum katalytischen Umsetzen von organischen Substanzen mit einem Fliessbettreaktor**

(30) Priorität: 22.11.1996 AT 2039/96
(71) Anmelder: OMV Aktiengesellschaft, 1090 Wien (AT)
(72) Erfinder: Hofbauer, Hermann, a.o. Univ.Prof.Dipl.-Ing.Dr., 1160 Wien (AT); Krobath, Philipp, Dipl.-Ing.Dr.techn., 1120 Wien (AT); Reichhold, Alexander, Dipl.-Ing.Dr.techn., 1040 Wien (AT); Weinstabl, Helmut H., Dipl.-Ing., 1100 Wien (AT)
(74) Vertreter: Widtmann, Georg, Dipl.-Ing. Dr. techn.

(57) **Zusammenfassung**

Vorrichtung zum katalytischen Umsetzen von organischen Substanzen mit einem Fließbettreaktor, der zumindest ein Steigrohr aufweist, einer Zuleitung (8) für einen festen, partikulierten Katalysator aus einem Fließbettregenerator (1) für denselben, einer weiteren Zuleitung (7) für ein Trägergas, einer Produktzuleitung (6) für die fluiden organischen Substanzen, einer Ableitung (12) für die fluiden Reaktionsprodukte, einer weiteren Ableitung für den Katalysator in den Fließbettregenerator, welcher eine Trägergaszuleitung und eine Fluidableitung aufweist, wobei der Fließbettreaktor (2) von dem Fließbettregenerator (1) zumindest teilweise umgeben ist, und der Fließbettreaktor (2) einen zumindest im oberen Bereich denselben umgebenden Trichter mit nach unten anschließendem Ausfließrohr (15) für den Katalysator aufweist, welcher fluiddicht mit der Außenwandung des Fließbettregenerators verbunden ist und in diesen den Katalysator entleert, wobei in den Zwischenraum von Trichter (3) mit nach unten anschließendem Ausfließrohr (15) und Fließbettreaktor, insbesondere Steigrohr, eine Fluidleitung (7) mündet und/oder entleert.

Zur Veröffentlichung gemeinsam mit der Zusammenfassung ist Fig. 1 bestimmt.

## Beschreibung

Die Erfindung hat eine Vorrichtung zum katalytischen Umsetzen von organischen Substanzen, insbesondere Cracken von Kohlenwasserstoffen, z. B. einer Erdölfraktion, mit einem Fließbettreaktor zum Gegenstand.

Eine Reihe von chemischen Reaktionen werden in Fließbetten durchgeführt, wobei der sogenannte Winkler-Generator zur Erzeugung von Wassergas aus Kohle wohl den Durchbruch für Fließbettreaktoren dargestellt hat. Bei Fließbettgeneratoren werden, wie bekannt, Feststoffe durch ein Gas, das beispielsweise inert oder auch reaktiv sein kann in einem Reaktionsgefäß je nach erwünschtem Zustand des Fließbettes entweder im wesentlichen in Schwebe gehalten oder auch durch das Gas aus dem Reaktor in Schwerkraftgegenrichtung gefördert. Bei einem derartigen Fließbettreaktor kann ein besonders guter Kontakt zwischen der gasförmigen Phase und der festen Phase erreicht werden. Die feste Phase kann entweder bei der Reaktion selbst umgesetzt werden oder lediglich als Katalysator dienen. Obwohl die Fließbettreaktoren für chemische Reaktionen besonders geeignet sind, da große Volumina umgesetzt werden können, besteht der Nachteil, daß eine Steuerung der Temperatur sehr schwer durchgeführt werden kann.

Aus der DE-35 36 871-A1 wird eine Vorrichtung zur Kohlevergasung bekannt. Diese Vorrichtung besteht aus einem äußeren zylindrischen Behälter, in dem ein innerer zylindrischer Behälter, u. zw. ein Steigrohr, angeordnet ist. In beiden Behältern ist teilchenförmige Kohle vorgesehen. Am unteren Boden des äußeren Behälters wird Wasserdampf eingeleitet, welcher gemeinsam mit den Kohleteilchen in das Steigrohr eingeleitet wird. In diesem findet die Reaktion zwischen Wasserdampf und Kohlepartikelchen statt, bei dem im wesentlichen ein Gemisch aus Kohlenmonoxid und Wasserstoff bei erhöhter Temperatur entsteht. Das obere Ende des Steigrohres ist von einer Haube umgeben, die nach unten offen ist und eine Ableitung für das Gasgemisch aus Wasserstoff und Kohlenmonoxid aufweist. In dieser Haube werden die Kohleteilchen abgeschieden und in den Zwischenraum zwischen äußeren Behälter und Steigrohr abgeleitet. In dem Zwischenraum zwischen Steigrohr und äußeren Behälter wandert die Kohle abwärts und wird von Luft verbrannt, die oberhalb des unteren Endes des Steigrohres eingeleitet wird. Dadurch wird die Wärme gewonnen, welche für die endotherme Reaktion der Umsetzung der Kohlepartikelchen mit Wasserdampf benötigt wird. Die Kohleteilchen führen hierbei einen Kreislauf aus, das heißt, im Steigrohr liegt ein Fließbett vor, in welchem die Kohleteilchen aufsteigen, wohingegen im Strömungsbereich zwischen dem Steigrohr und dem äußeren Behälter die Kohleteilchen sich nach unten auf Grund der Schwerkraft entgegen der Strömungsrichtung der Verbrennungsluft bewegen. Eine Trennung der beiden Reaktionsräume liegt nicht vor, da der Wasserdampf sowohl in das Steigrohr als auch in den äußeren Behälter eingeleitet wird, so daß die Gefahr besteht, daß im äußeren Behälter ebenfalls die Umsetzung von Wasserdampf mit den Kohlepartikelchen durchgeführt wird, so daß auch dort Synthesegas erzeugt wird, das bei ungünstigen Bedingungen zur Explosion des äußeren Behälters führen kann.

Ein weiterer Fließbettreaktor wird aus der DE-22 40 695-B bekannt. Bei diesem Fließbettreaktor ist ebenfalls ein äußerer zylindrischer Behälter vorgesehen, innerhalb welchem ein Steigrohr angeordnet ist. Der äußere Behälter weist an seinem unteren Ende eine Gaszuleitung auf, wobei das zugeleitete Gas sowohl in das Steigrohr als auch in den äußeren Behälter gelangt. Das Steigrohr weist zusätzlich an seinem unteren Ende eine Glocke auf, in welche eine weitere Gasleitung mündet. Mit dieser weiteren Gaszuführung kann weiteres Gas in das Steigrohr eingeleitet werden, so daß Festkörperteilchen im Steigrohr nach oben gefördert werden können, welche an einem Prallblech abgeschieden werden. Das Gas aus dem Steigrohr wird mit dem Gas aus dem äußeren Zylinder vereinigt und gemeinsam abgeführt. Es tritt hierbei lediglich eine Trennung von Feststoffen und Gas ein. Ein derartiger Reaktor ist beispielsweise zur pyrolytischen Beschichtung von Kernbrennstoffteilchen geeignet.

Eine Vorrichtung zum katalytischen Cracken von Erdölprodukten wird in der US-4,822,761-A beschrieben. Wie bekannt, stellt das Cracken, u. zw. sowohl das thermische als auch das katalytische, eine endotherme Reaktion dar. Beim katalytischen Cracken wird in der Gasphase gearbeitet, wobei die zu crackenden Substanzen verdampft werden. Beim katalytischen Cracken treten Carbeniumionen und damit Isomerisierungsvorgänge auf. Als Katalysator dienen künstliche oder natürliche Montmorillonite. Die endotherme Reaktion wird bei ca. 450°C bis 500°C durchgeführt. Neben dem erwünschten Crackreaktionen findet auch teilweise eine Abscheidung von Kohlenstoff statt, der sich auf den Katalysatorpartikelchen ablagert und so dem Katalysator desaktiviert. Zum weiteren Einsatz des Katalysators ist es erforderlich, denselben von der Kohlenstoffschicht zu befreien.

In der oben angeführten amerikanischen Patentschrift wird nun eine Vorrichtung beschrieben, die einerseits ein Wirbelbett zum katalytischen Cracken und andererseits ein Wirbelbett zum Verbrennen des Kohlenstoffes auf dem Katalysator aufweist. In ein Steigrohr wird von unten der regenerierte Katalysator gemeinsam mit einem Trägergas zugeführt, in welches weiters verdampfte Erdölprodukte eingeführt werden. Die Strömungsgeschwindigkeit des Trägergases gemeinsam mit dem verdampften Erdölprodukten ist so hoch, daß die Katalysatoren aus dem Steigrohr ausgetragen werden und außerhalb desselben heruntersinken. Das Trägergas wird gemeinsam mit den gecrackten Erdölprodukten aus dem Raum oberhalb des Steigrohres abgezogen, gekühlt und aufgetrennt. Die Abscheidung des teilchenförmigen Katalysators kann über Zyklone erfolgen, wobei zusätzlich der Katalysator von dem gasförmigen Reaktionsprodukt, beispielsweise mit Wasserdampf, befreit wird. Der Katalysator gelangt sodann über eine eigene Leitung in einen weiteren Wirbelschichtreaktor, in dem von unten Luft oder andere sauerstoffhältige Gase eingeleitet werden, so daß der Kohlenstoff, welcher sich auf dem Katalysator abgelagert hat, verbrannt wird. Im Wirbelbett herrscht ca. eine Temperatur von 700°C, wobei der reaktivierte Katalysator, gegebenenfalls nach Einstellung auf eine erwünschte Temperatur mit einem Wärmetauscher, über die bereits angeführte Rohrleitung in den unteren Bereich des Steigrohres zugeführt wird. Eine derartige Vorrichtung erlaubt ein kontinuierliches katalytisches Cracken, wobei eine vollständige Trennung des Reaktionsraumes zum Cracken und der thermischen Reaktivierung des Katalysators gegeben ist. Nachteilig bei einer derartigen Vorrichtung ist, daß einerseits aufwendige Rohrleitungen zwischen den beiden Fließbetten vorliegen müssen und daß weiters ein direkter wärmemäßiger Austausch zwischen den beiden Fließbetten nicht stattfinden kann.

Die vorliegende Erfindung hat sich zum Ziel gesetzt, eine Vorrichtung zum katalytischen Umsetzen von organischen Substanzen, insbesondere Cracken von Kohlenwasserstoffen, z. B. einer Erdölfraktion, zu schaffen, die einerseits eine sichere Trennung eines Raumes, in welchem eine Reaktivierung des Katalysators in einem Wirbelbett stattfindet, vom eigentlichen Reaktionsraum erlaubt, und andererseits ein unmittelbarer Wärmeaustausch zwischen den beiden Wirbelbettschichten erfolgen kann. Eine weitere Aufgabe der vorliegenden Erfindung besteht darin, eine Anlage zu schaffen, die lediglich einen geringen Platzbedarf aufweist und die Anzahl von Rohrleitungen, insbesondere der Verbindungen zwischen den einzelnen Wirbelbetten, so gering wie möglich zu halten, erlaubt wobei weiters durch geringste Druckunterschiede die Dimensionierung der Wandstärken besonders gering gehalten werden kann.

Die vorliegende Erfindung geht von einem Stand der Technik aus, wie er durch die US-4,822,761-A gegeben ist.

Die erfindungsgemäße Vorrichtung zum katalytischen Umsetzen von organischen Substanzen, insbesondere zum Cracken von Kohlenwasserstoffen, z. B. einer Erdölfraktion, mit zumindest einem Fließbettreaktor, der zumindest ein Steigrohr aufweist, einer Zuleitung für einen festen, partikulierten Katalysator aus einem Fließbettregenerator für denselben, einer weiteren Zuleitung für ein Trägergas, einer Produktzuleitung für die fluiden organischen Substanzen, gegebenenfalls gemeinsam mit der Zuleitung für das Trägergas, einer Ableitung für die fluiden Reaktionsprodukte, einer weiteren Ableitung für den Katalysator in den Fließbettregenerator, welcher eine Trägergaszuleitung und eine Fluidableitung und gegebenenfalls einen Wärmetauscher aufweist, besteht im wesentlichen darin, daß der Fließbettreaktor von dem Fließbettregenerator zumindest teilweise umgeben ist, und daß der Fließbettreaktor einen zumindest im oberen Bereich denselben umgebenden Trichter mit nach unten anschließendem Ausfließrohr für den Katalysator aufweist, wobei der Trichter fluiddicht mit der Außenwandung des Fließbettregenerators verbunden ist und in diesen den Katalysator entleert, wobei in den Zwischenraum von Trichter mit nach unten anschließendem Ausfließrohr und Fließbettreaktor, insbesondere Steigrohr, eine Fluid-, insbesondere eine Gaszuleitung, mündet und/oder entleert. Durch eine derartige Anordnung entsteht eine Dreiteilung der gesamten Vorrichtung zum katalytischen Umsetzen, u. zw. einerseits das Steigrohr, andererseits der Trichter mit Ausfließrohr und weiters der diesen umgebende Fließbettregenerator. Durch das Vorsehen einer Fluid-bzw. Gaszuleitung in den Zwischenraum von Trichter und Fließbettreaktor kann eine Trennung des Fließbettreaktors vom Fließbettregenerator erreicht werden, wobei durch die Anordnung der einzelnen Behälter bzw. Behälterteile zusätzliche Rohrleitungen, beispielsweise für den Katalysator, nicht erforderlich sind. Dadurch, daß der Trichter mit der Außenwandung des Fließbettregenerators verbunden ist, kann eine Vermischung des erwünschten Reaktionsproduktes mit dem aus dem Fließbettregenerator austretenden Fluid, also beispielsweise Luft und CO₂, das von der Verbrennung des Kohlenstoffs aus dem Katalysator resultiert, einfach vermieden werden. Weiters kann ein direkter Kontakt zwischen dem Fluid im Fließbettregenerator und der Wandung des Fließbettreaktors, z. B. des Steigrohres, erhalten werden, so daß dem Reaktor, in welchem eine endotherme Reaktion stattfindet, die Wärme aus dem Regenerator direkt zugeführt werden kann.

Ist der Fließbettreaktor nach unten offen und taucht in das Fließbett des Katalysators ein, so ist eine besonders einfache Zuführung des Katalysators vom Fließbettregenerator in den Fließbettreaktor gegeben.

Weist der Fließbettreaktor eine Mehrzahl von Steigrohren auf, die vom Trichter mit nach unten anschließendem Ausfließrohr teilweise umgeben sind, so kann mit besonders einfachen Mitteln die vorbestimmte Wärmeaustauschfläche bei einer vorgegebenen Produktmenge erreicht werden, da auf diese Art und Weise nicht die Strömungsgeschwindigkeit, welche erforderlich ist, um ein Fließbett aufrechtzuerhalten, geändert werden muß, sondern das Verhältnis von freien Strömungsquerschnittsflächen und Oberfläche, die für den Wärmeaustausch dient, einfach durch die konstruktive Ausbildung angepaßt werden kann.

Ist das bzw. sind die Steigrohre nach oben sich erweiternd, insbesondere konisch, ausgestaltet, so ist ein Wirbelbettreaktor gegeben, bei welchem einer Volumszunahme, z. B. beim Cracken, Rechnung getragen ist, so daß eine beispielsweise einheitliche Strömungsgeschwindigkeit im Fließbettreaktor erreicht wird, womit die Verweilzeit des Katalysators pro Volumseinheit des Fließbettreaktors bei entsprechender Ausbildung je nach Erfordernis gehalten werden kann.

Münden die Steigrohre des Fließbettreaktors in einem im Trichter und/oder dem nach unten anschließendem Ausfließrohr angeordneten Rohr, so kann trotz Volumszunahme des Fluides im Fließbettreaktor im oberen Bereich eine Verlangsamung des Fluides erreicht werden, um beispielsweise eine weitere erwünschte Reaktion zu Ende zu führen.

Weist der Fließbettregenerator unten einen verengten, insbesondere im Querschnitt kreisförmigen, Bereich auf, in welchem der/die unten offenen Steigrohr(e) in das Fließbett des Katalysators eintaucht bzw. eintauchen, so kann mit einfachen konstruktiven Mitteln die Strömungsgeschwindigkeit im Fließbettreaktor höher gehalten werden als die Strömungsgeschwindigkeit im Fließbettregenerator, so daß ein Kreislauf des Katalysators mit einfachsten Mitteln bewerkstelligt sein kann.

Entleeren die Trägergaszuleitungen in das/die Steigrohr(e) im verengten Bereich des Fließbettregenerators bzw. münden in demselben, so kann besonders einfach die Zuförderung des Katalysators in den Fließbettreaktor bewerkstelligt werden, wobei gleichzeitig Fehlgase, beispielsweise Sauerstoff enthaltende Gase od. dgl., in dem Fließbettreaktor vollkommen vermieden werden können.

Endigt das an dem Trichter anschließende Ausfließrohr in einer Tasse oder taucht es insbesondere in eine Tasse ein, die im Fließbettregenerator angeordnet ist, wobei der Katalysator über die Tasse in den Fließbettregenerator entleerbar ist, so kann der Katalysator oberhalb des Bodens des Regenerators in die Wirbelschicht eingeleitet werden, so daß eine Verteilung des mit einer Koksschichte versehenen Katalysators im Regenerator zwangsweise erreichbar ist, womit gleichzeitig eine möglichst homogene Wärmeausbildung im Regenerator gewährleistet sein kann, so daß der Wärmeübergang vom Regenerator mit einfachen konstruktiven Maßnahmen gewährleistet sein kann. Weiters wird dadurch ein Siphon gebildet, welcher einen Abschluß des Zwischenraumes zwischen Ausfließrohr und Steigrohr ermöglicht.

Mündet und/oder entleert in die Tasse eine Fluid-, insbesondere Gaszuleitung, wobei das Fluid in den Zwischenraum zwischen Fließbettreaktor und Ausfließrohr geleitet ist, so kann eine besonders sichere Trennung zwischen Regenerator und Reaktor erreicht werden, so daß beispielsweise die in den Regenerator eingeleiteten Gase, wie Sauerstoff, Luft od. dgl. nicht in den Reaktor kommen, da der Reaktor durch die Tasse, welche als Siphon wirkt, als auch durch das Fluid, das aus der Gaszuleitung in den Zwischenraum eingeleitet wird, denselben auf Grund rheologischer Gegebenheiten sowie den Unterschied der Druckpotentiale im wesentlichen verschließt.

Im folgenden wird die Erfindung anhand der Zeichnungen und eines Beispieles näher erläutert.

Es zeigen in schematischer Darstellung:

Fig. 1 einen Wirbelschichtreaktor mit einem zylindrischen Steigrohr,

Fig. 2 einen Wirbelschichtreaktor mit einem nach oben konisch erweiternden Steigrohr,

Fig. 3 einen Wirbelschichtreaktor mit fünf Steigrohren und einem anschließendem größeren Steigrohr und

Fig. 4 einen Wirbelschichtreaktor mit mehreren zylindrischen Steigrohren.

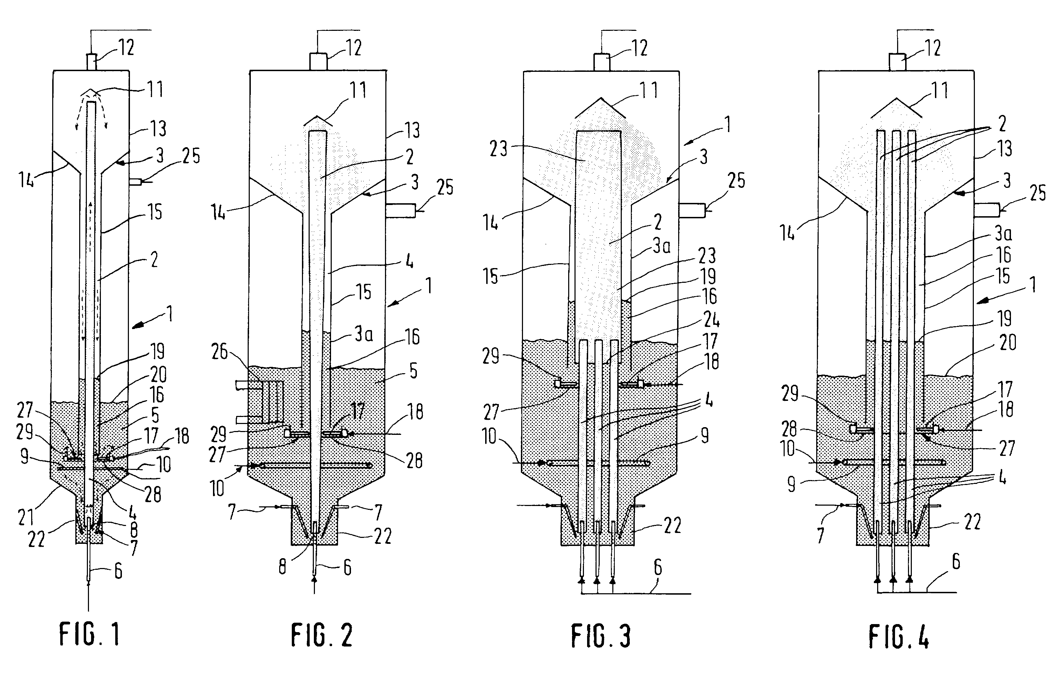

Die in Fig. 1 dargestellte Vorrichtung aus Stahl weist einen Fließbettregenerator 1 mit einer Höhe von 180 cm und einem Durchmesser von 20 cm, einen in demselben angeordneten Fließbettreaktor 2 und zwischen den beiden einen Trichter 3 mit nach unten anschließendem Ausfließrohr 15 auf. Der Fließbettreaktor 2 mit einem Steigrohr 4, das zylindrisch ausgebildet ist und einen Durchmesser von 2,0 cm aufweist, reicht bis zu den zylindrischen verengten Bereich 22 des Fließbettregenerators 1. Das Steigrohr 4 ist nach unten offen und taucht in das Wirbelbett 5 des Fließbettregenerators ein. In das Steigrohr 4 mündet eine Produktzuleitung 6, über welche die verdampften oder unter Druck erhitzten organischen Substanzen, z. B. eine Erdölfraktion, zugeführt werden. Zusätzlich sind für das Trägergas Zuleitungen 7 vorgesehen, über welche einerseits in das Steigrohr 4 und andererseits in den Fließbettreaktor 1 Inertgas zugeführt wird. Durch diese Zuleitung 7 wird verhindert, daß Gas aus dem Fließbettregenerator 1 in den Fließbettreaktor 2 gelangen kann. Durch die untere Öffnung des Steigrohres 4 wird eine Zuleitung 8 für den Katalysator aus dem Fließbettregenerator 1 in den Fließbettreaktor 2 gebildet. Über den Düsenkranz 9 und die Trägergaszuleitung 10 wird ein Trägergas, insbesondere reaktives Trägergas, z. B. Luft, dem Fließbettregenerator 1 zugeführt. Die auf dem feinteiligen Katalysator mit einem größten Durchmesser von 40 µ m bis 200 µm abgeschiedene Kohlenstoffschichte wird durch den Sauerstoff abgebrannt. Die Reaktionsprodukte Kohlenmonoxid, Kohlendioxid und Luft werden über die Fluidableitung 25 abgezogen. Die zu crackende Substanz, welche gemeinsam mit dem Katalysator und dem interten Gas in das Steigrohr 4 eintritt, wird entlang dem Steigrohr in die Höhe gefördert und reagiert in demselben. Der mit dem Katalysatorpartikelchen beladene Gasstrom gelangt zum Prallblech 11, an dem eine Abscheidung des Katalysators aus dem Gas erfolgt. Die gas- bzw. dampfförmigen Produkte werden über die Ableitung 12 aus dem Reaktor 2 abgezogen. Der feste Katalysator wird durch den Trichter 3 aufgefangen, welcher mit der Außenwandung 13 des Fließbettregenerators 1 gasdicht verbunden ist. Der kegelförmige Teil 14 des Trichters 3 ist mit einem nach unten gerichteten Ausfließrohr 15 versehen, das in das Wirbelbett 5 des Regenerators eintaucht. Das Ausfließrohr 15 endigt unten vor dem Steigrohr 4, wobei in den Zwischenraum 16 zwischen Fließbettreaktor 2 und dem Ausfließrohr 15 über dem Düsenkranz 17 Inertgas über die Fluidzuleitung 18 eingeleitet wird. Das Ausfließrohr 15 endigt mit seinem unteren Ende vor einer Tasse 27, die einen Boden 28 aufweist, welcher mit dem Steigrohr 4 fluiddicht verbunden ist. Weiters weist die Tasse einen im wesentlichen parallel zum Ausfließrohr 15 angeordneten zylindrischen Steg 29 auf, wobei, wie in den Fig. 1, 2 und 4 dargestellt, das Ausfließrohr 15 des Trichters 3 in die Tasse eintaucht. Ein derartiges Eintauchen ist funktionsmäßig bei entsprechender Drucksteuerung der Fließmedien, wie in Fig. 3 dargestellt ist, nicht zwingend vorgeschrieben. Die Sicherheit ist jedoch besonders dann gewährleistet, wenn ein derartiges Eintauchen des Ausfließrohres 15 in der Tasse 27 gewährleistet ist. In der Tasse 27 kann weiters die Fluidzuleitung 18 angeordnet sein, welche entweder in die Tasse oder auch direkt in den Zwischenraum zwischen Fließbettreaktor 2 und Ausfließrohr 15 das Fluid einleitet. Der Katalysator, dessen Weg in Fig. 1 strichliert dargestellt ist, gelangt vom Fließbettreaktor 2 über das Prallblech 11, den Trichter 3, das Ausfließrohr 15 in die Tasse 27, sodann über den zylindrischen Steg 29 der Tasse in den Regenerator 1 und von diesem in den Fließbettreaktor. Die Phasengrenze 19 im Ausfließrohr 15 ist auf Grund der Strömungsbedingungen in diesem Rohr höher als die Phasengrenze 20 des Fließbettregenerators 1. Der Regenerator 1 weist einen kegeligen Absatz 21 auf und geht in einen verengten zylindrischen Bereich 22 über, in welchem das untere Ende des Steigrohres 4 sowie die Zuleitung 7 für das Trägergas, über welches inertes Gas zugeführt wird, mündet. Durch diese Verengung des Querschnittes des Fließbettregenerators wird zusätzlich verhindert, daß die über die Trägergaszuleitung 10 zugeführte Luft in das Steigrohr 4 gelangen kann.

Der in Fig. 2 dargestellte Fließbettreaktor 2 und Fließbettregenerator 1 unterscheidet sich von dem in Fig. 1 dargestellten dadurch, daß das Steigrohr 4 mit einer Länge von 200,0 cm nicht zylindrisch, sondern von unten nach oben kegelig mit zunehmendem Durchmesser, u. zw. von 2 cm auf 4 cm, ausgebildet ist und einen Wärmetauscher 26 aufweist. Falls die Volumszunahme kontinuierlich ist, kann eine kegelige Ausbildung des Steigrohres 4 vorgenommen sein. Tritt hingegen eine stufenweise oder nichtkontinuierliche Zunahme des Volumens ein, so kann eine entsprechende volumsmäßige Ausbildung des Steigrohres 4 durchgeführt werden. Eine derartige nichtkegelige, beispielsweise stufenförmige, Erweiterung des Steigrohres kann durch sogenanntes Fließdrücken mit Hydraulikflüssigkeiten erreicht werden.

Der in Fig. 3 dargestellte Fließbettregenerator 1 und Fließbettreaktor 2 unterscheidet sich von der Ausführungsform von Fig. 1 dadurch, daß mehrere Steigrohre 4 mit einem Durchmesser von 1,5 cm, im vorliegenden Fall fünf Steigrohre 4, im Fließbettreaktor 2 vorgesehen sind, die gemeinschaftlich in ein Rohr 23 mit einem Durchmesser von 8,0 cm münden. Dieses Rohr 23 ist innerhalb des Ausfließrohres 15 mit einem Durchmesser von 11,0 cm des Trichters 3 angeordnet und weist einen Rohrboden 24 mit nicht dargestellten Durchbrechungen auf, in welchem die Steigrohre 4 eingeschweißt sind.

Die in Fig. 4 dargestellte Ausführungsform eines Fließbettregenerators 1 mit einem Fließreaktor 2 entspricht der Ausführungsform gemäß Fig. 1, wobei anstelle eines Steigrohres 4 fünf Steigrohre 4 angeordnet sind.

Durch die Anordnung des Steigrohres bzw. der Rohre im Fließbettregenerator wird jeweils ein Syphon gebildet.

Die erfindungsgemäße Vorrichtung ist nicht nur zum Cracken von Erdölfraktionen, sondern auch zum Dehydrieren von Alkanen, Skelettisomerisieren von n-Alkanen, Synthesen in der Gasphase, z. B. Methylierung von Phenol zu Kresol, Gasphasenreaktionen mit stark verkokendem Katalysator, z. B. steam reforming, aber auch thermischen gemeinsam mit katalytischen Cracken von Rohöl geeignet.

### Beispiel:

In der Vorrichtung gemäß Fig. 1 wurde ein hydriertes Vakuumgasöl mit einem Siedebereich von 350°C bis 580°C einer Dichte bei 15°C von über 0,90 g/cm³, einem Schwefelgehalt von weniger als 0,3 Gew.-% und einem Stickstoffgehalt von unter 0,02 Gew.-% gecrackt, wobei die Aufteilung der zu crackenden Verbindungen wie folgt vorlag:

| | |
|---|---|
| 23,0 Gew.-% | Kohlenstoff aromatisch |
| 70,0 Gew.-% | Kohlenstoff paraffinisch |
| 7,0 Gew.-% | Kohlenstoff naphtenisch. |

Dieses hydrierte Vakuumgasöl wurde über die Produktleitung 6 mit 350°C in das Steigrohr 4 eingeleitet. Über die Gaszuleitung 7 gelangt einerseits Inertgas, also Trägergas, in das Steigrohr 4, weiters wird der regenerierte Katalysator (Spektra 965 der Firma Grace GmbH, Worms, Deutschland, mit einer mittleren Teilchengröße von 90 µm) aus dem Fließbettregenerator 5 in den Fließbettreaktor 2 geleitet. Im Fließbettreaktor herrscht ein Temperaturgradient, das heißt, es nimmt von unten nach oben die Temperatur ab, da der Crackprozeß einen endothermen Vorgang darstellt. Die Temperatur im Fließbettreaktor im Bereich der Tasse 27 beträgt 530°C, wohingegen das Gemisch im Bereich des Prallbleches 11 eine Temperatur von 510°C aufweist. Über die Fluidzuleitung 18 wird Inertgas zugeleitet, so daß der Zwischenraum 16 zwischen Fließbettreaktor 2 und Ausfließrohr 15 stetig mit einem Inertgaspropfen verschlossen wird, so daß kein Sauerstoff, welcher zur Regenerierung des Katalysators im Fließbettregenerator erforderlich ist, eindringen kann. Die mittlere Temperatur im Fließbettregenerator beträgt 650°C.

Wie bekannt, kann bei Fließbettschichten nur schwer über den Druck eine signifikante Aussage getroffen werden, so daß im folgenden die Temperatur und Gasmenge, welche über die einzelnen Leitungen in den Regenerator bzw. Reaktor eingeleitet werden, eine Aussage getroffen werden soll.

Über die Leitung 6 wird das bereits angeführte hydrierte Vakuumgasöl mit 350°C und 50 g/min eingeleitet.

| Über die Zuleitungen 7: | | |
|---|---|---|
| Trägergas, u. zw. Stickstoff | 25°C | 2 g/min |

| Über den Düsenkranz 9: | | |
|---|---|---|
| Luft | 25°C | 30 g/min |

| Über die Fluidzuleitung 18: | | |
|---|---|---|
| Trägergas, u. zw. Stickstoff | 25°C | 6 g/min. |

Das über die Ableitung 12 abgezogene Crackprodukt wies folgende Zusammensetzung auf:

| | |
|---|---|
| Gas bis C₂: | 2,8 Gew.-% |
| Gas bis C₃: | 3,1 Gew.-% |
| Gas bis C₄: | 13,0 Gew.-% |
| Benzin (CP bis 215°C): | 51,1 Gew.-% |
| Liquid cycle oil und Rückstand: | 26,0 Gew.-% |
| Koks: | 4,0 Gew.-%. |

Es lag ein Konversionsgrad von 69,96 % vor. Der Konversionsgrad wurde nach 5, 10, 20, 30, 40, 50 und 100 Betriebsstunden überprüft und es lag keine Abnahme des Konversionsgrades sowie keine Änderung der Crackproduktverteilung vor. Es lag somit, selbst nach 100 Betriebsstunden keine Änderung der Aktivität des Katalysators vor, wobei gleichzeitig nachgewiesen werden konnte, daß ein Wärmemengenausgleich zwischen dem Regenerator und dem Reaktor verwirklicht werden konnte.

## Patentansprüche

1. Vorrichtung zum katalytischen Umsetzen von organischen Substanzen, insbesondere zum Cracken von Kohlenwasserstoffen, z. B. einer Erdölfraktion, mit zumindest einem Fließbettreaktor (2), der zumindest ein Steigrohr aufweist, einer Zuleitung (8) für einen festen, partikulierten Katalysator aus einem Fließbettregenerator (1) für denselben, einer weiteren Zuleitung (7) für ein Trägergas, einer Produktzuleitung (6) für die fluiden organischen Substanzen, gegebenenfalls gemeinsam mit der Zuleitung für das Trägergas, einer Ableitung (12) für die fluiden Reaktionsprodukte, einer weiteren Ableitung für den Katalysator in den Fließbettregenerator, welcher eine Trägergaszuleitung und eine Fluidableitung und gegebenenfalls einen Wärmetauscher (26) aufweist, *dadurch gekennzeichnet,* daß der Fließbettreaktor (2) von dem Fließbettregenerator (1) zumindest teilweise umgeben ist, und daß der Fließbettreaktor (2) einen zumindest im oberen Bereich denselben umgebenden Trichter (3) mit nach unten anschließendem Ausfließrohr (15) für den Katalysator aufweist, wobei der Trichter (3) fluiddicht mit der Außenwandung (13) des Fließbettregenerators (1) verbunden ist und in diesen den Katalysator entleert, wobei in den Zwischenraum von Trichter (3) mit nach unten anschließendem Ausfließrohr (15) und Fließbettreaktor (2), insbesondere Steigrohr, eine Fluid-, insbesondere eine Gaszuleitung (7, 18), mündet und/oder entleert.

2. Vorrichtung nach Anspruch 1, dadurch gekennzeichnet, daß der Fließbettreaktor (2) unten offen ist und in das Fließbett (5) des Katalysators des Fließbettregenerators (1) eintaucht.

3. Vorrichtung nach Anspruch 1 oder 2, dadurch gekennzeichnet, daß der Fließbettreaktor (2) eine Mehrzahl von Steigrohren (4) aufweist, die vom Trichter (3) mit nach unten anschließendem Ausfließrohr (15) teilweise umgeben sind.

4. Vorrichtung nach einem der Ansprüche 1, 2 oder 3, dadurch gekennzeichnet, daß das/die Steigrohr(e) (4) nach oben sich erweiternd, insbesondere konisch, ausgebildet sind.

5. Vorrichtung nach einem der Ansprüche 1 bis 4, dadurch gekennzeichnet, daß die Steigrohre (4) in einem im Trichter angeordneten Rohr (23) münden.

6. Vorrichtung nach einem der Ansprüche 1 bis 5, dadurch gekennzeichnet, daß der Fließbettregenerator (1) unten einen verengten, insbesondere im Querschnitt kreisförmigen, Bereich (22) aufweist, in welchem das/die unten offene(n) Steigrohr(e) (4) in das Fließbett (5) des Katalysators tauchen.

7. Vorrichtung nach einem der Ansprüche 1 bis 6, dadurch gekennzeichnet, daß Trägergaszuleitungen (7), die in das/die Steigrohr(e) (4) entleeren, in dem verengten Bereich (22) des Fließbettregenerators (1) angeordnet sind, insbesondere in diesen münden.

8. Vorrichtung nach einem der Ansprüche 1 bis 7, dadurch gekennzeichnet, daß das an den Trichter (3) nach unten anschließende Ausfließrohr (15) über einer Tasse (27) endigt, insbesondere in eine Tasse (27) eintaucht, die im Fließbettregenerator (1) angeordnet ist, wobei der Katalysator über die Tasse (27) in den Fließbettregenerator (1) entleerbar ist.

9. Vorrichtung nach Anspruch 8, dadurch gekennzeichnet, daß in die Tasse (27) eine Fluid-, insbesondere eine Gaszuleitung (7, 18), mündet und/oder entleert, wobei das Fluid in den Zwischenraum (16) zwischen Fließbettreaktor (2) und Ausfließrohr (15) leitbar ist.
